# EUROPÄISCHE PATENTSCHRIFT

(11) **EP 2 997 810 B1**
(45) Veröffentlichungstag und Bekanntmachung des Hinweises auf die Patenterteilung: **25.03.2020**
(21) Anmeldenummer: 14003264.0
(22) Anmeldetag: 20.09.2014
(51) Int. Cl.: A01D 34/73

(54) **Arbeitsgerät**
Work device
Appareil de travail

(43) Veröffentlichungstag der Anmeldung: 23.03.2016
(73) Patentinhaber: Andreas Stihl AG & Co. KG, 71336 Waiblingen (DE)
(72) Erfinder: Gottinger, Clemens, 6330 Kufstein (AT); Waldhör, Stefan, 6330 Kufstein (AT); Schimmele, Stefan, 6330 Kufstein (AT)
(74) Vertreter: Reinhardt, Annette

(56) Entgegenhaltungen:
- EP-A1- 0 324 322
- DE-U1- 20 319 363
- GB-A- 1 220 652
- US-A- 4 171 608
- US-A- 5 946 895

## Beschreibung

Die Erfindung betrifft ein Arbeitsgerät wie beispielsweise einen Rasenmäher oder dgl. der im Oberbegriff des Anspruchs 1 angegebenen Gattung.

Aus der US 5,884,463 ist ein Rasenmäher mit einer Antriebswelle bekannt, die ein Messer und eine oberhalb des Messers, also auf der dem Mähergehäuse zugewandten Seite des Messers angeordnete Scheibe antreibt. Da der Durchmesser der Scheibe kleiner ist als die Länge des Messers, kann im Außenbereich geschnittenes Gras an der Scheibe vorbeifliegen und sich im Mähergehäuse festsetzen.

Aus der US 3,097,467 ist ein Rasenmäher mit einem topfförmigen Bauteil bekannt, welches über das Messer ragt und dadurch verhindert, dass Schmutz in das Gehäuse geschleudert wird. Das Messer ist direkt an der Antriebswelle festgeschraubt. Die Scheibe besitzt in der Scheibenmitte eine Öffnung, in welcher eine Buchse angeordnet ist, die die Antriebswelle umgibt, so dass die Scheibe auf der Antriebswelle frei schwimmend gelagert ist.

Aus der US 4,171,608 A geht eine Haltevorrichtung für das Messer eines Rasenmähers hervor, die eine Scheibe und ein daran angeordnetes Messer umfasst. Das Messer erstreckt sich über den gesamten Durchmesser der Scheibe und wird über schlüssellochförmige Öffnungen an Haltebolzen der Scheibe fixiert und über eine Befestigungsschraube gemeinsam mit der Scheibe an der Antriebswelle verschraubt. Das Messer ist unmittelbar an der Scheibe angeordnet, so dass sich zwischen der Schneide des Messers und der Scheibe nur ein geringer Abstand ergibt.

Der Erfindung liegt die Aufgabe zugrunde, ein Arbeitsgerät der gattungsgemäßen Art zu schaffen, dessen Aufbau einfach ist.

Diese Aufgabe wird mit den Merkmalen des Anspruchs 1 gelöst.

Es ist vorgesehen, das Messer drehfest mit der Scheibe zu verbinden und das Antriebsmoment zum rotierenden Antrieb des Messers von der Scheibe auf das Messer zu übertragen. Die Scheibe selbst ist drehfest an der Antriebswelle gehalten. Dadurch ist ein einfacher Aufbau eines Arbeitsgeräts mit Scheibe und mit Messer möglich.

Vorteilhaft ist an der Scheibe eine Aufnahme für das Messer ausgebildet. Aufgrund der Aufnahme erfolgt eine sichere Drehmomentübertragung von der Scheibe auf das Messer. Vorteilhaft umfasst die Scheibe mindestens einen Steg, der an einer Längsseite des Messers anliegt und die Aufnahme begrenzt. Dadurch kann das Messer einfach in der Aufnahme entlang des Stegs positioniert werden. Durch das Anliegen des Messers am Steg wird zusätzlich die Drehmomentübertragung von der Scheibe auf das Messer einfach ermöglicht.

Vorzugsweise weist die Aufnahme einen Boden auf, an dem das Messer anliegt. Dadurch ist das Messer in der Aufnahme in Höhenrichtung positioniert. Zweckmäßig weist der Boden der Aufnahme eine Rippenstruktur auf, die eine Anlage für das Messer bildet. Durch die Rippenstruktur wird dem Boden, damit der Aufnahme und damit der gesamten Scheibe Stabilität verliehen. Bei der Montage des Messers an der Scheibe kann eine korrekte Positionierung des Messers an der Scheibe auch bei leicht verschmutzter Scheibe oder bei leicht verschmutztem Messer gewährleistet werden, da beim Anlegen des Messers an die Scheibe der Schmutz zwischen die Rippen der Rippenstruktur verdrängt wird und das Messer auf den Rippen in der vordefinierten Position aufliegt. Im Betrieb deckt das Messer die Rippenstruktur weitgehend ab, so dass die Rippenstruktur im Betrieb vor Verschmutzung geschützt ist.

Vorteilhaft ist das Messer mit der Scheibe formschlüssig verbunden. Damit kann eine hohe Drehmomentübertragung von der Scheibe auf das Messer unabhängig vom Anzugsmoment einer Schraube, welche die Scheibe und das Messer an der Antriebswelle festlegt, erfolgen. Dadurch ist die Drehmomentübertragung von der Scheibe auf das Messer ohne zusätzliche Bauteile konstruktiv vorgegeben. Vorteilhaft besitzt die Scheibe mindestens einen Zapfen, der in einem Abstand zur Drehachse in eine Öffnung des Messers ragt. Der Zapfen ermöglicht auf konstruktiv einfache Weise eine Drehmomentübertragung von der Scheibe auf das Messer.

Vorzugsweise ist das Messer über ein Befestigungselement in Richtung der Drehachse an der Antriebswelle gehalten und die Scheibe weist mindestens ein Sicherungsmittel zur Sicherung des Befestigungselements auf. Zweckmäßig umfasst das Befestigungsmittel ein Verbindungselement, insbesondere eine Mutter, und das Sicherungsmittel verhindert ein Lösen des Verbindungselements. Insbesondere verhindert das Sicherungsmittel ein Verdrehen der Mutter in Löserichtung. Dadurch kann das Messer in beiden Drehrichtungen angetrieben werden. In der einen Drehrichtung, die der Festziehrichtung der Mutter entspricht, ist ein Lösen des Messers durch die Schraubverbindung konstruktiv unterbunden. In der anderen Drehrichtung verhindert das Sicherungsmittel, dass sich die Mutter im Betrieb in Löserichtung drehen kann, so dass auch in dieser Drehrichtung ein Lösen des Messers unterbunden ist.

Zweckmäßig ist an der Scheibe mindestens ein Betätigungselement zum Lösen des Sicherungsmittels angeordnet. Dadurch kann ein Benutzer durch Betätigen des Betätigungselements das Sicherungsmittel ohne Verwendung von Werkzeug lösen und die Schraube beispielsweise mit einem Schraubenschlüssel lösen, so dass das Messer von der Scheibe abgenommen werden kann.

Vorteilhaft ist das Betätigungselement einteilig mit der Scheibe ausgebildet. Dadurch ist ein konstruktiv einfacher Aufbau möglich.

Zweckmäßig ist die Länge des Messers größer als der Radius der Scheibe. Die Länge des Messers beträgt vorteilhaft mindestens 70%, insbesondere mindestens 90% des Durchmessers der Scheibe. Besonders zweckmäßig ist ein durchgehendes Messer mit der Scheibe drehfest verbunden.

Es kann vorteilhaft sein, dass die Länge des Messers kleiner ist als der Radius der Scheibe. Insbesondere ist das Messer im Außenbereich der Scheibe angeordnet. Zweckmäßig sind mindestens zwei Messer an der Scheibe festgelegt, die insbesondere in der gleichen Schneidebene wirken.

Ein Ausführungsbeispiel der Erfindung wird im Folgenden anhand der Zeichnung erläutert. Es zeigen:
- Fig. 1: eine schematische Darstellung eines Arbeitsgeräts,
- Fig. 2: eine schematische Schnittdarstellung durch die Antriebswelle, das Messer und die Scheibe des Arbeitsgeräts aus Fig. 1,
- Fig. 3: eine perspektivische Ansicht auf die Anordnung aus Fig. 2 von unten,
- Fig. 4: eine perspektivische Ansicht auf die Befestigungseinrichtung von unten,
- Fig. 5: eine Ansicht auf die Scheibe von der dem Messer zugewandten Seite der Scheibe,
- Fig. 6: eine perspektivische Ansicht auf die Scheibe von der dem Messer zugewandten Seite,
- Fig. 7: eine perspektivische Ansicht von der dem Messer abgewandten Seite auf die Scheibe in einer nicht erfindungsgemäßen Ausführungsvariante mit auf der Scheibe angeordnetem Messer,
- Fig. 8: eine perspektivische Ansicht von der dem Messer zugewandten Seite auf die nicht erfindungsgemäße Scheibe mit auf der Scheibe angeordnetem Messer.

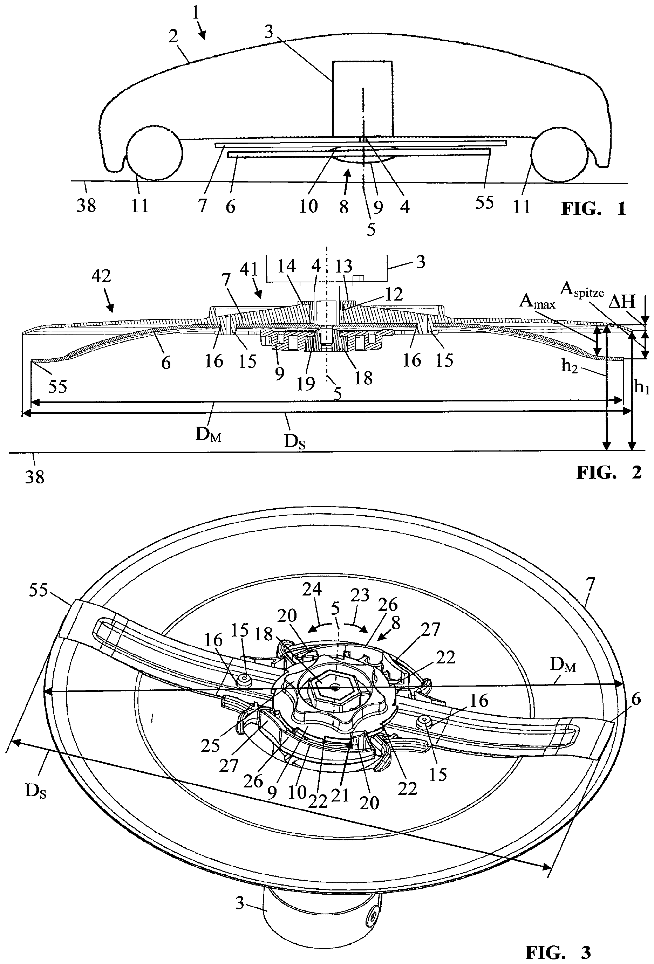

Fig. 1 zeigt als Ausführungsbeispiel für ein Arbeitsgerät einen Rasenmäher 1. Der Rasenmäher 1 ist als selbstfahrender Rasenmäher ausgebildet, der sich in einem vordefinierten Bereich frei bewegt und nicht von einem Bediener geführt oder geschoben wird. Der Rasenmäher 1 kann jedoch auch von einem Bediener geführt sein. Hierfür besitzt der Rasenmäher 1 vorteilhaft einen nicht gezeigten Griffbügel. Zum Fahren über den Boden 38 besitzt der Rasenmäher 1 mehrere Räder 11. Der Rasenmäher 1 besitzt ein Gehäuse 2, in dem ein Antriebsmotor 3 angeordnet ist. Der Antriebsmotor 3 treibt eine Antriebswelle 4 um eine Drehachse 5 rotierend an. An der Antriebswelle 4 ist eine Scheibe 7 befestigt. An der Scheibe 7 ist mit einer Befestigungseinrichtung 8 ein Messer 6 befestigt. Das Messer 6 schließt radial mit einer in den Fig. 1 bis 3 gezeigten radialen Außenkante 55 ab. Die radiale Außenkante 55 beschreibt bei rotierendem Messer 6 den Fliehkreis des Messers 6. Die Befestigungseinrichtung 8 umfasst ein Befestigungselement 9, das an der dem Antriebsmotor 3 abgewandten Seite des Messers 6 angeordnet ist und mit der Scheibe 7 zusammenwirkt. Die Befestigungseinrichtung 8 sichert das Messer in Umfangsrichtung und in axialer Richtung der Drehachse 5.

Durch die Drehbewegung der Scheibe 7 im Betrieb werden Grashalme, die auf die Scheibe 7 geschleudert werden, aufgrund der Zentrifugalkraft nach außen an den Scheibenrand befördert und fliegen von der Scheibe 7 weg. Dadurch ist sichergestellt, dass sich die Scheibe 7 fortwährend selbst reinigt und dadurch die Verschmutzung der Scheibe 7 gering ist. Die Scheibe 7 begrenzt die Menge an Schmutzablagerungen am Gehäuse 2. Damit ist gewährleistet, dass das Messer 6 im Betrieb immer einen Abstand zu den Schmutzablagerungen aufweist. Im Betrieb des Rasenmähers 1 wird kein zusätzliches, von der Rotation des Messers und der Verschmutzung hervorgerufenes Geräusch verursacht. Der Rasenmäher 1 verliert keine Leistung aufgrund von Verschmutzung.

Wie Fig. 2 zeigt, ist an der Scheibe 7 eine Hülse 12 angeordnet, die die Scheibe 7 durchragt und mit einem Bund 13 an einer dem Antriebsmotor 3 zugewandten Oberseite 14 der Scheibe 7 anliegt. An der Gegenseite liegt der Bund 13 an einem nicht gezeigten Absatz der Antriebswelle 4 an und ist dadurch in axialer Richtung der Drehachse 5 gesichert. Die Hülse 12 stellt eine drehfeste Verbindung zwischen der Antriebswelle 4 und der Scheibe 7 her. Hierzu besitzt die Hülse 12 nicht gezeigte Abflachungen, die mit entsprechenden Abflachungen der Antriebswelle 4 und Abflachungen in einer die Hülse 12 aufnehmenden Öffnung der Scheibe 7 zusammenwirken.

Zur drehfesten Verbindung mit dem Messer 6 besitzt die Scheibe 7 zwei Zapfen 15, die in entsprechende Öffnungen 16 des Messers 6 ragen. Die Zapfen 15 und die Öffnungen 16 sind auch in Fig. 3 gezeigt. Im Ausführungsbeispiel sind die beiden Zapfen 15 auf gegenüberliegenden Seiten der Drehachse 5 angeordnet. Die Zapfen 15 besitzen im Ausführungsbeispiel den gleichen Abstand zur Drehachse 5.

Das Befestigungselement 9 ist als Griffmutter ausgebildet, wie auch Fig. 3 zeigt. Die Scheibe 7 und das Befestigungselement 9 bestehen aus Kunststoff. Das Befestigungselement 9 besitzt eine Sechskantmutter 18, mit der das Befestigungselement 9 auf ein entsprechendes Außengewinde der Antriebswelle 4 aufgeschraubt ist. In vollständig festgeschraubtem Zustand liegt die Sechskantmutter 18 mit einem Fortsatz 19 am Messer 6 an und drückt das Messer 6 gegen die Hülse 12 und gegen die Antriebswelle 4. Die Sechskantmutter 18 besteht, wie auch die Hülse 12, aus Metall. In einem weiteren Ausführungsbeispiel kann das Befestigungselement 9 als Schraube ausgebildet sein, welche in ein entsprechendes Innengewinde der Antriebswelle 4 eingeschraubt ist.

Das Messer 6 liegt im Innenbereich 41 der Scheibe 7 an der Scheibe 7 an. Der Innenbereich 41 der Scheibe 7 ist der Bereich um die Drehachse 5, der von der Drehachse 5 einen Abstand von weniger als 35%, insbesondere weniger als 28%, insbesondere weniger als 20%, des Durchmessers Ds der Scheibe 7 besitzt. An den Innenbereich 41 der Scheibe 7 schließt sich ein Außenbereich 42 der Scheibe 7 an. Im Außenbereich 42 der Scheibe 7 nimmt der Abstand zwischen Messer 6 und Scheibe 7 bei zunehmender radialer Entfernung von der Drehachse 5 allmählich bis zu einem Maximalabstand Aₘₐₓ zu. Die radiale Außenkante 55 des Messers 6 besitzt zur Scheibe 7 einen Abstand A_{spitze}, der etwa gleich groß ist wie der Maximalabstand Aₘₐₓ. Der Maximalabstand Aₘₐₓ liegt in einem Bereich, der im Ausführungsbeispiel etwa 45% des Durchmessers Ds der Scheibe 7 von der Drehachse 5 entfernt ist. In einem weiteren Ausführungsbeispiel kann der Maximalabstand Amax zweckmäßig in einem Bereich liegen, der von etwa 30% bis etwa 47% des Durchmessers Ds der Scheibe 7 von der Drehachse 5 entfernt ist. Der Maximalabstand Aₘₐₓ bezogen auf die Länge D_{M} des Messers 6 beträgt von etwa 1% und bis etwa 20%, insbesondere von etwa 2% und bis etwa 12%, insbesondere von etwa 3% und bis etwa 8%. Der Abstand des Messers 6 zur Scheibe 7 ist vergleichsweise klein.

Damit der Schmutz, der auf der Scheibe 7 haftet und aufgrund der Zentrifugalkraft an die Außenkante der Scheibe 7 befördert wird, nicht in das Gehäuse 2 geschleudert wird, ist die Außenkante der Scheibe 7 in Richtung auf den Boden 38 leicht gewölbt. Der Schmutz, der durch die Zentrifugalkraft nach außen getragen wird, erfährt aufgrund der Wölbung einen Impuls in Richtung Boden 38. Die Wölbung ist im Außenbereich 42 der Scheibe 7 angeordnet und beginnt in einem Bereich, der von etwa 10% bis etwa 50%, zweckmäßig von etwa 20% bis etwa 49%, vorteilhaft etwa 45% des Durchmessers Ds der Scheibe 7 von der Drehachse 5 entfernt ist und endet am Außenumfang der Scheibe 7. Im Bereich der Außenkante der Scheibe 7 kann auch ein Rand vorgesehen sein, der sich in Richtung auf den Boden erstreckt. Der Abstand h₁ des Außenumfangs der Scheibe 7 zum Boden 38 ist geringer als der Abstand h₂ der Scheibe 7 am Beginn der Wölbung, wobei die Differenz vom Abstand h₂ der Scheibe 7 am Beginn der Wölbung zum Boden 38 und dem Abstand h₁ des Außenumfangs der Scheibe 7 zum Boden 38 einer Höhenänderung ΔH der Scheibe 7 entspricht. Die Höhenänderung ΔH der Scheibe 7 in Richtung der Drehachse 5 im Bereich der Wölbung der Scheibe 7 beträgt etwa 15%, insbesondere etwa 8%, insbesondere etwa 2%, des Durchmessers Ds der Scheibe 7.

Wie die Figuren 2 und 3 zeigen, ist der Scheibendurchmesser Ds der Scheibe 7 größer als die Länge D_{M} des Messers 6. Damit überdeckt die Scheibe 7 das Messer 6 komplett. Da die Scheibe 7 auf der dem Antriebsmotor 3 zugewandten Seite des Messers 6 angeordnet ist, schützt die Scheibe 7 das Gehäuse 2 vor abgeschnittenen Grashalmen, die vom Messer 6 aufgewirbelt und in Richtung auf den Antriebsmotor 3 geschleudert werden. Damit wird eine Verschmutzung der Innenseite des Gehäuses 2 vermindert.

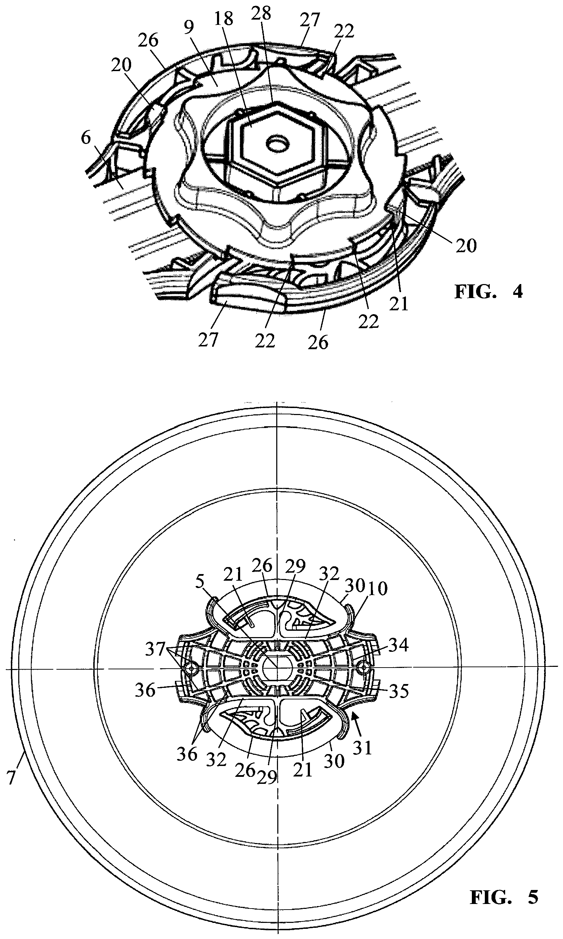

Die Figuren 3 und 4 zeigen die Befestigungseinrichtung 8 im Einzelnen. Die Befestigungseinrichtung 8 besitzt zwei lösbare Sicherungsmittel 20, die einander gegenüberliegend angeordnet sind. Die Sicherungsmittel 20 sind an der Scheibe 7 festgelegt. Jedes Sicherungsmittel 20 besitzt ein Rastelement 21 (Fig. 5), das in einer in Fig. 3 gezeigten Sperrstellung an einem Rastzahn 22 des Befestigungselements 9 einrastet. Das Befestigungselement 9 ist in einer Befestigungsrichtung 23 um die Drehachse 5 drehbar. Beim Drehen des Befestigungselements 9 in Befestigungsrichtung 23 um die Drehachse 5 wird die Gewindeverbindung zwischen der Gewindehülse 12 und der Antriebswelle 4 angezogen, und das Messer 6 wird gegen die Scheibe 7 gepresst. Zum Lösen des Befestigungselements 9, beispielsweise zum Austausch des Messers 6, muss das Befestigungselement 9 in einer der Befestigungsrichtung 23 entgegen gerichteten Löserichtung 24 um die Drehachse 5 gedreht werden. Die Bewegung in Löserichtung 24 wird in Sperrstellung von den Rastelementen 21 verhindert. Dadurch kann verhindert werden, dass sich das Befestigungselement 9 im Betrieb des Rasenmähers 1 unbeabsichtigt in Löserichtung 24 dreht.

Zum Verdrehen des Befestigungselementes 9 besitzt das Befestigungselement 9 ein Griffprofil 25, an dem der Bediener das Befestigungselement 9 greifen kann. Zum Lösen der Sicherungsmittel 20 sind zwei Betätigungselemente, nämlich zwei Hebel 26 vorgesehen, die einander gegenüberliegend angeordnet sind. Die Hebel 26 sind an der Scheibe 7 im Innenbereich 41 schwenkbar gelagert. Die Hebel 26 besitzen jeweils einen Betätigungsabschnitt 27, an dem der Bediener die Hebel 26 drücken und dadurch die Rastelemente 21 bezogen auf die Drehachse 5 radial nach außen lenken kann. Dadurch gelangen die Rastelemente 21 aus dem Bereich der Rastzähne 22, und das Befestigungselement 9 kann in Löserichtung 24 verdreht werden. Die Betätigungsabschnitte 27 der Hebel 26 müssen gedrückt gehalten werden, bis das Befestigungselement 9 so weit aufgeschraubt wurde, dass die Rastelemente 21 nicht mehr in der Ebene der Rastzähne 22 liegen und in diese nicht mehr eingreifen können.

Wie in Fig. 4 gezeigt, besitzt das Befestigungselement 9 eine Wand 28, die am Außenumfang der Sechskantmutter 18 anliegt, die Sechskantmutter 8 eng umgibt und drehfest am Befestigungselement 9 hält. Die Wand 28 besitzt einen sechseckigen Außenumfang, an welchem ein Schraubenschlüssel angreifen kann und mit dem das Befestigungselement 9 schnell montiert oder gelöst werden kann.

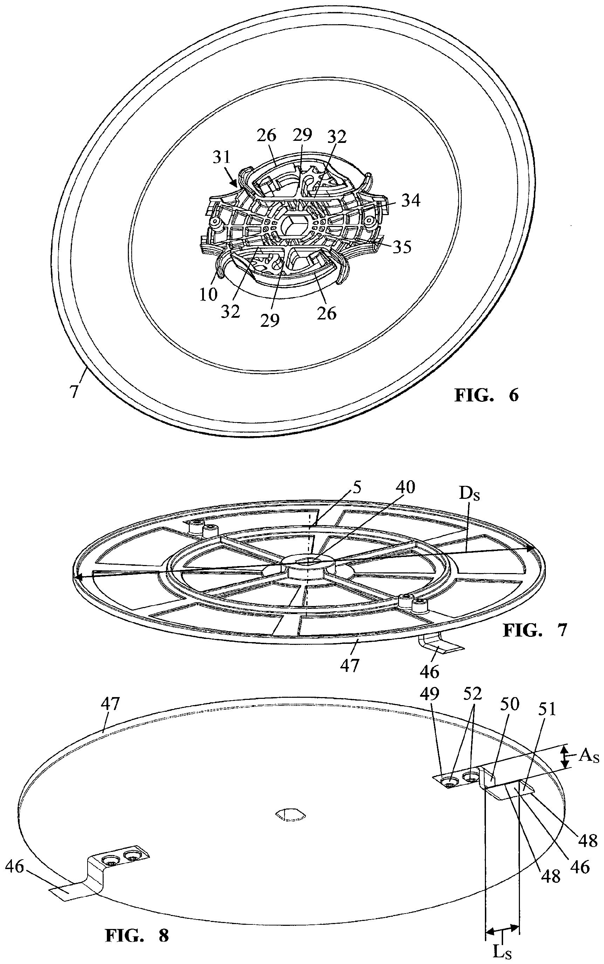

Wie die Figuren 5 und 6 zeigen, sind die beiden Hebel 26 über Biegeelemente 29 mit der Scheibe 7 verbunden. Die Biegeelemente 29 sind elastisch und im Ausführungsbeispiel als Stege ausgeführt, die einteilig mit der Scheibe 7 und den Hebeln 26 ausgeführt sind. Die Hebel 26 sind ausschließlich über die Biegeelemente 29 mit der Scheibe 7 verbunden. Damit die Hebel 26 verschwenkt werden können, sind Aussparungen 30 in der Scheibe 7 im Bereich der Hebel 26 vorgesehen. Jede der Aussparungen ist in Draufsicht (Fig. 5) etwa nierenförmig und umläuft den Hebel 26, außer im Bereich des Biegeelements 29, vollständig. Die Hebel 26 liegen in der Ebene der Scheibe 7. Dadurch, dass die Hebel 26 in den Aussparungen 30 und in der Ebene der Scheibe 7 liegen, sind die Hebel 26 vor ungewolltem Betätigen, beispielsweise durch Steinschlag, geschützt.

An der Scheibe 7 ist eine Aufnahme 31 für das in Fig. 3 gezeigte Messer 6 ausgebildet. Die Scheibe 7 umfasst zwei Stege 32, die sich an den beiden Längsseiten des Messers 6 anlegen und die die Aufnahme 31 seitlich begrenzen. Die Aufnahme 31 weist einen Boden 34 auf, an dem das in Fig. 3 gezeigte Messer 6 anliegt. Der Boden 34 weist eine Rippenstruktur 35 auf, die eine Anlage für das in Fig. 3 gezeigte Messer 6 bildet. Die Rippenstruktur 35 ist im Ausführungsbeispiel wie ein Spinnennetz ausgebildet. Die Rippenstruktur 35 umfasst in Fig. 5 gezeigte Querrippen 36 und Längsrippen 37. Die Querrippen 36 verlaufen teilkreisförmig, wobei der Mittelpunkt des Teilkreises auf der Drehachse 5 liegt. Die Querrippen 36 enden an den Stegen 32. Die Längsrippen 37 verlaufen sternförmig, wobei der Mittelpunkt des Sterns auf der Drehachse 5 liegt. Die Längsrippen 37 schneiden die Querrippen 36 etwa orthogonal. Um die Stabilität zu erhöhen, sind im inneren Bereich, also dem Bereich, der der Drehachse 5 nahe liegt, mehrere Querrippen 36 angebracht. Im Ausführungsbeispiel sind in der Rippenstruktur 35 insgesamt zehn Längsrippen 37 und zehn Querrippen 36 ausgebildet.

Die Figuren 7 und 8 zeigen ein nicht erfindungsgemäßes Ausführungsbeispiel einer Scheibe 47. Im Zentrum der Scheibe ist eine Öffnung 40 zur Befestigung der Scheibe 47 an der Antriebswelle 4 (Fig. 2) vorgesehen. An der Scheibe 47 sind zwei Messer 46 festgelegt. Die beiden

Messer 46 sind achsensymmetrisch zur Drehachse 5 angeordnet. Jedes der Messer 46 besitzt eine abgekröpfte Form und besteht aus Metall. Jedes der Messer 46 liegt in einem ersten Abschnitt 49 an der Scheibe 47 an und ist mit zwei Schrauben 52 an der Scheibe 47 festgeschraubt. An einem dritten Abschnitt 51 sind zwei Schneidflächen 48 des Messers 46 ausgebildet, wobei jede der Schneidflächen 48 in radialer Richtung eine Länge Ls aufweist. Der dritte Abschnitt 51 verläuft etwa parallel zum ersten Abschnitt 49 in einem Abstand As, so dass im Betrieb die Schneidflächen 48 Gras schneiden können. Der Abstand As bezogen auf die Länge Ls beträgt von etwa 20% bis etwa 80%, insbesondere von etwa 30% bis etwa 60%, vorteilhaft von etwa 35% bis etwa 55%. Ein zweiter Abschnitt 50, der etwa orthogonal zum ersten Abschnitt 49 und etwa orthogonal zum dritten Abschnitt 51 steht, verbindet den ersten Abschnitt 49 mit dem dritten Abschnitt 51. In der nicht erfindungsgemäßen Ausführungsvariante nach den Figuren 7 und 8 stehen die Messer 46 nicht über die Scheibe 47 über, so dass abgeschnittenes Gras und Schmutz gegen die Scheibe 47 prallt und das Gehäuse 2 nicht verschmutzt.

## Patentansprüche

1. Arbeitsgerät mit mindestens einem von einem Antriebsmotor (3) um eine Drehachse (5) rotierend angetriebenen Messer (6), wobei das Arbeitsgerät eine Antriebswelle (4) besitzt, an der eine Scheibe (7) angeordnet ist, wobei an einer im Betrieb dem Boden (38) zugewandten Seite der Scheibe (7) das mindestens eine Messer (6) angeordnet ist, wobei die Scheibe (7) drehfest an der Antriebswelle (4) gehalten ist, wobei das Messer (6) drehfest mit der Scheibe (7) verbunden ist, wobei das Antriebsmoment zum rotierenden Antrieb des Messers (6) von der Scheibe (7) auf das Messer (6) übertragen wird, und wobei das Messer (6) in einem Innenbereich (41) der Scheibe (7) an der Scheibe (7) anliegt,
**dadurch gekennzeichnet, dass** der Abstand der radialen Außenkante (55) des Messers (6) zur Drehachse (5) kleiner als der Radius der Scheibe (7) ist und dass sich an den Innenbereich (41) der Scheibe (7) ein Außenbereich (42) der Scheibe (7) anschließt, in dem der Abstand zwischen Messer (6) und Scheibe (7) bei zunehmender radialer Entfernung von der Drehachse (5) allmählich bis zu einem Maximalabstand (Aₘₐₓ) zunimmt.

2. Arbeitsgerät nach Anspruch 1,
**dadurch gekennzeichnet, dass** an der Scheibe (7) eine Aufnahme (31) für das Messer (6) ausgebildet ist.

3. Arbeitsgerät nach Anspruch 2,
**dadurch gekennzeichnet, dass** die Scheibe (7) mindestens einen Steg (32) umfasst, der an einer Längsseite des Messers (6) anliegt und die Aufnahme (31) begrenzt.

4. Arbeitsgerät nach Anspruch 2 oder 3,
**dadurch gekennzeichnet, dass** die Aufnahme (31) einen Boden (34) aufweist, an dem das Messer (6) anliegt.

5. Arbeitsgerät nach Anspruch 4,
**dadurch gekennzeichnet, dass** der Boden (34) eine Rippenstruktur (35) aufweist, die eine Anlage für das Messer (6) bildet.

6. Arbeitsgerät nach einem der Ansprüche 1 bis 5,
**dadurch gekennzeichnet, dass** das Messer (6) mit der Scheibe (7) formschlüssig verbunden ist.

7. Arbeitsgerät nach Anspruch 6,
**dadurch gekennzeichnet, dass** die Scheibe (7) mindestens einen Zapfen (15) besitzt, der in einem Abstand zur Drehachse (5) in eine Öffnung (16) des Messers (6) ragt.

8. Arbeitsgerät nach einem der Ansprüche 1 bis 7,
**dadurch gekennzeichnet, dass** das Messer (6) über ein Befestigungselement (9) in Richtung der Drehachse (5) an der Antriebswelle (4) gehalten ist, und dass die Scheibe (7) mindestens ein Sicherungsmittel (20) zur Sicherung des Befestigungselements (9) aufweist.

9. Arbeitsgerät nach Anspruch 8,
**dadurch gekennzeichnet, dass** das Befestigungselement (9) ein Verbindungselement umfasst, und dass das Sicherungsmittel (20) ein Verdrehen des Verbindungselements in Löserichtung (24) verhindert.

10. Arbeitsgerät nach Anspruch 8 oder 9,
**dadurch gekennzeichnet, dass** an der Scheibe (7) mindestens ein Betätigungselement zum Lösen des Sicherungsmittels (20) angeordnet ist.

11. Arbeitsgerät nach Anspruch 10,
**dadurch gekennzeichnet, dass** das Betätigungselement einteilig mit der Scheibe (7) ausgebildet ist.

12. Arbeitsgerät nach einem der Ansprüche 1 bis 11,
**dadurch gekennzeichnet, dass** die Länge des Messers (6) größer als der Radius der Scheibe (7) ist.

13. Arbeitsgerät nach einem der Ansprüche 1 bis 11,
**dadurch gekennzeichnet, dass** die Länge des Messers (6) kleiner als der Radius der Scheibe (7) ist.

## Claims

1. Working implement with at least one blade (6) driven to rotate about an axis of rotation (5) by a drive motor (3), wherein the working implement has at least one drive shaft (4) on which a disc (7) is located, wherein the at least one blade (6) is located on a side of the disc (7) which faces the ground (38) in operation, wherein the disc (7) is non-rotatably held on the drive shaft (4), wherein the blade (6) is non-rotatably joined to the disc (7), wherein the drive torque for the rotary drive of the blade (6) is transmitted from the disc (7) to the blade (6), and wherein the blade (6) bears against the disc (7) in an interior region of the disc (7), **characterised in that** the distance of the radial outer edge (55) of the blade (6) from the axis of rotation (5) is less than the radius of the disc (7), and **in that** the inner region (41) of the disc (7) is adjoined by an outer region (42) of the disc (7) in which the distance between the blade (6) and the disc (7) gradually increases to a maximum distance (Aₘₐₓ) as the radial distance from the axis of rotation (5) increases.

2. Working implement according to claim 1,
**characterised in that** a receptacle (31) for the blade (6) is formed at the disc (7).

3. Working implement according to claim 2,
**characterised in that** the disc (7) comprises at least one web (32), which bears against a long side of the blade (6) and bounds the receptacle (31).

4. Working implement according to claim 2 or 3,
**characterised in that** the receptacle (31) has a base (34), against which the blade (6) bears.

5. Working implement according to claim 4,
**characterised in that** the base (34) has a ribbed structure (35), which forms a contact for the blade (6).

6. Working implement according to any of claims 1 to 5,
**characterised in that** the blade (6) is positively joined to the disc (7).

7. Working implement according to claim 6,
**characterised in that** the disc (7) has at least one peg (15) projecting into an opening (16) of the blade (6) at a distance from the axis of rotation (5).

8. Working implement according to any of claims 1 to 7,
**characterised in that** the blade (6) is held on the drive shaft (4) by way of a fastening element (9) in the direction of the axis of rotation (5), and **in that** the disc (7) has at least one securing means (20) for securing the fastening element (9).

9. Working implement according to claim 8,
**characterised in that** the fastening element (9) comprises a connecting element, and **in that** the securing means (20) prevents a turning of the connecting element in the release direction (24).

10. Working implement according to claim 8 or 9,
**characterised in that** at least one actuating element for releasing the securing means (20) is located at the disc (7).

11. Working implement according to claim 10,
**characterised in that** actuating element is designed in one piece with the disc (7).

12. Working implement according to any of claims 1 to 11,
**characterised in that** the length of the blade (6) is greater than the radius of the disc (7).

13. Working implement according to any of claims 1 to 11,
**characterised in that** the length of the blade (6) is less than the radius of the disc (7).

## Revendications

1. Appareil de travail avec au moins une lame (6) entraînée en rotation autour d'un axe de rotation (5) par un moteur d'entraînement (3), dans lequel l'appareil de travail a un arbre d'entraînement (4) sur lequel est disposé un disque (7), dans lequel la au moins une lame (6) est disposée sur un côté du disque (7) tourné, en fonctionnement, vers le sol (38), dans lequel le disque (7) est retenu fixe en rotation sur l'arbre d'entraînement (4), dans lequel la lame (6) est reliée fixe en rotation au disque (7), dans lequel le couple d'entraînement pour entraîner en rotation la lame (6) est transmis par le disque (7) à la lame (6), et dans lequel la lame (6) est appliquée contre le disque (7) dans une zone intérieure (41) de celui-ci,
**caractérisé en ce que** la distance entre le bord extérieur radial (55) de la lame (6) et l'axe de rotation (5) est inférieure au rayon du disque (7) et **en ce qu'**il est prévu, faisant suite à la zone intérieure (41) du disque (7), une zone extérieure (42) du disque (7) dans laquelle la distance entre la lame (6) et le disque (7) augmente progressivement avec l'éloignement radial croissant par rapport à l'axe de rotation (5), jusqu'à une distance maximale (Aₘₐₓ).

2. Appareil de travail selon la revendication 1,
**caractérisé en ce qu'**un logement (31) pour la lame (6) est formé sur le disque (7).

3. Appareil de travail selon la revendication 2,
**caractérisé en ce que** le disque (7) comprend au moins une nervure (32) qui est appliquée contre un côté longitudinal de la lame (6) et limite le logement (31).

4. Appareil de travail selon la revendication 2 ou 3,
**caractérisé en ce que** le logement (31) présente un fond (34) contre lequel la lame (6) est appliquée.

5. Appareil de travail selon la revendication 4,
**caractérisé en ce que** le fond (34) présente une structure nervurée (35) qui forme un appui pour la lame (6).

6. Appareil de travail selon l'une des revendications 1 à 5,
**caractérisé en ce que** la lame (6) est reliée par complémentarité de forme au disque (7).

7. Appareil de travail selon la revendication 6,
**caractérisé en ce que** le disque (7) a au moins une cheville (15) qui dépasse, à une distance de l'axe de rotation (5), dans une ouverture (16) de la lame (6).

8. Appareil de travail selon l'une des revendications 1 à 7,
**caractérisé en ce que** la lame (6) est retenue sur l'arbre d'entraînement (4) dans la direction de l'axe de rotation (5) par un élément de fixation (9), et **en ce que** le disque (7) présente au moins un moyen de blocage (20) pour bloquer l'élément de fixation (9).

9. Appareil de travail selon la revendication 8,
**caractérisé en ce que** l'élément de fixation (9) comprend un élément de liaison et **en ce que** le moyen de blocage (20) empêche une rotation de l'élément de liaison dans la direction de déblocage (24).

10. Appareil de travail selon la revendication 8 ou 9,
**caractérisé en ce qu'**au moins un élément d'actionnement pour débloquer le moyen de blocage (20) est disposé sur le disque (7).

11. Appareil de travail selon la revendication 10,
**caractérisé en ce que** l'élément d'actionnement est formé d'un seul tenant avec le disque (7).

12. Appareil de travail selon l'une des revendications 1 à 11,
**caractérisé en ce que** la longueur de la lame (6) est supérieure au rayon du disque (7).

13. Appareil de travail selon l'une des revendications 1 à 11,
**caractérisé en ce que** la longueur de la lame (6) est inférieure au rayon du disque (7).
